# FASCICULE DE BREVET EUROPEEN

(11) **EP 3 003 757 B1**
(45) Date de publication et mention de la délivrance du brevet: **16.05.2018**
(21) Numéro de dépôt: 14731690.5
(22) Date de dépôt: 20.05.2014
(51) Int. Cl.: B60K 6/12, B60K 17/14, B60W 10/16, F16H 48/18, F16H 61/456, F03C 1/06, B60K 7/00, F16H 61/472

(54) **PROCÉDÉ ET DISPOSITIF DE CONTRÔLE/COMMANDE D'UN MODULE HYDRAULIQUE DIFFÉRENTIEL POUR VÉHICULE HYBRIDE**
VERFAHREN UND VORRICHTUNG ZUM STEUERUNG/KOMMANDIEREN EINES DIFFERENZIELLEN HYDRAULIKMODULS FÜR EIN HYBRIDFAHRZEUG
METHOD AND DEVICE FOR CONTROLLING/COMMANDING A DIFFERENTIAL HYDRAULIC MODULE FOR A HYBRID VEHICLE

(30) Priorité: 31.05.2013 FR 1355000
(43) Date de publication de la demande: 13.04.2016
(73) Titulaire: Technoboost, 75116 Paris (FR)
(72) Inventeur: ROUSS, Vicky, F-92800 Puteaux (FR); GIANNONI, Marc, F-75009 Paris (FR); WASCHEUL, Michael, F-78260 Achères (FR)
(74) Mandataire: Rosenberg, Muriel Sylvie
(86) Numéro de dépôt international: PCT/FR2014/051166
(87) Numéro de publication internationale: WO 2014/191656

(56) Documents cités:
- EP-A1- 1 705 372
- WO-A1-01/51304
- DE-A1-102010 009 704
- US-A1- 2008 128 189
- US-B1- 6 321 866

## Description

L'invention porte sur un procédé et un dispositif de contrôle/commande d'un module hydraulique différentiel équipant un véhicule automobile hybride hydraulique, le module hydraulique différentiel comprenant deux moteurs hydrauliques actionnant chacun une roue motrice d'un même essieu du véhicule en étant indépendants l'un de l'autre en fonctionnement et pouvant ainsi effectuer une action de remplacement d'un différentiel.

Un véhicule hybride hydraulique se différencie d'un véhicule hybride électrique par sa source de puissance hydraulique en lieu et place d'une source de puissance d'origine électrique. Dans un véhicule hybride hydraulique, la boîte de vitesses classique est remplacée ou complétée par un circuit hydraulique fermé.

Une source d'énergie rotative, fréquemment un moteur thermique voire électrique, entraîne une ou plusieurs pompes hydrauliques volumétriques, de préférence à cylindrée variable de haute précision. La pompe hydraulique transforme l'énergie mécanique en énergie hydraulique. Cette énergie est stockée dans un ou des accumulateurs haute pression et est ensuite restituée dans le ou les moteurs hydrauliques pour propulser le véhicule.

Il existe plusieurs types d'architecture pour des transmissions hybrides hydrauliques se divisant principalement en trois groupes:
- une architecture dite série,
- une architecture dite parallèle, et
- une architecture dite à dérivation, la dérivation de puissance mettant en oeuvre un ou plusieurs trains épicycloïdaux.

Une transmission de type série, remplace complètement l'architecture de la transmission classique : elle comporte une liaison hydraulique entre le moteur thermique et la roue.

Avec une transmission de type parallèle, le système hydraulique vient en général se greffer sur la transmission classique du véhicule en ayant comme rôle d'optimiser le système initial.

La transmission de type à dérivation est une architecture mixte permettant d'obtenir une transmission série ou parallèle.

La pompe hydraulique (ou le moteur, en fonction du sens de rotation et de son utilisation) utilisée pour de telles transmissions est souvent une pompe volumétrique à pistons, notamment une pompe à pistons axiaux en ligne avec un barillet tournant.

L'autre famille de pompes volumétriques aussi utilisée est celle des pompes à pistons radiaux. Dans une pompe volumétrique, le fluide est isolé dans une chambre à volume variable pour être transféré de la zone d'aspiration (basse pression) vers la zone de refoulement (haute pression). Ce type de pompe est dit volumétrique car la pompe transfère un volume de fluide à chaque tour de fonctionnement : ce volume par tour de fonctionnement est appelé cylindrée.

Il est connu également une technologie dite à cylindres flottants permettant d'obtenir des rendements mécanique et hydraulique supérieurs à ceux atteints par les technologies de pompes conventionnelles. Avec cette technologie, il est possible de concevoir un module hydraulique faisant office de différentiel, c'est-à-dire un module comprenant deux moteurs hydrauliques intégrés à l'intérieur du module, chacun des moteurs actionnant au moins une roue motrice d'un même essieu du véhicule indépendamment de l'autre moteur. Dans ce cas, il peut être créé un différentiel de vitesse entre deux roues motrices d'un même essieu en jouant sur les différentes vitesses et il peut être obtenu même un système de correction de trajectoire automatique.

Le document FR-A-2 987 316 divulgue ainsi un module hydraulique compact présentant les caractéristiques énoncées dans le préambule de la revendication 1.

L'association de deux tels moteurs dans un module hydraulique, chacun pour une roue motrice différente d'un même essieu permet de remplacer la boîte de vitesses classique et la couronne du différentiel ainsi que ses composants internes. Les deux moteurs du module hydraulique produisent un couple respectif à partir de la pression hydraulique stockée dans les accumulateurs ou fournie par une pompe et l'appliquent directement aux arbres de roue motrice d'un même essieu.

Cependant le pilotage de chacun des moteurs d'un tel module hydraulique différentiel nécessite une régulation particulière afin d'accomplir les prestations requises et de garantir différentes configurations différentielles.

Par conséquent, le problème à la base de l'invention est de concevoir un procédé et un dispositif de régulation d'un module hydraulique à deux moteurs indépendants l'un de l'autre entraînant chacun une ou des roues motrices sur le côté droit ou gauche du véhicule qui puissent permettre un fonctionnement optimal du module en garantissant notamment l'obtention de différentes configurations différentielles.

Pour atteindre cet objectif, il est prévu selon l'invention un procédé de contrôle/commande d'un module hydraulique équipant un véhicule automobile hybride, le module hydraulique comprenant deux moteurs hydrauliques logés respectivement dans une partie droite ou gauche, chaque moteur comportant au moins un piston et un cylindre avec l'un de ces deux éléments étant un élément flottant et solidarisé à un plateau, chaque moteur étant raccordé à au moins un circuit hydraulique sélectivement à basse pression ou à haute pression et convertissant l'énergie provenant du fluide sous pression en énergie mécanique sous la forme d'un couple d'entraînement transmis à au moins une roue motrice à laquelle il est associé, le procédé effectuant, sur une demande de consigne de couple respective émise par le contrôle/commande du groupe motopropulseur, une régulation de couple des moteurs hydrauliques, caractérisé en ce que la régulation du couple s'effectue indépendamment pour les parties droite et gauche, cette régulation étant fonction des mesures de différence de pression haute et basse du circuit hydraulique, de la position angulaire de la partie respective et du régime de la roue motrice associée à la partie.

L'effet technique est d'obtenir un contrôle/commande efficace d'un module hydraulique différentiel avec commande indépendante des parties droite et gauche selon les mesures des principaux paramètres influant sur le couple comme la différence de pression haute et basse du circuit hydraulique, la position angulaire des parties droite et gauche et du régime de la roue motrice associée à chaque partie. Un tel module hydraulique ne nécessite plus la présence d'un différentiel en sortie des moteurs.

Le pilotage, en débit et en pression des deux moteurs hydrauliques, de façon séparée permet de bénéficier de configurations différentielles différentes comme:
- un différentiel libre, comme la plupart des différentiels mécaniques,
- un différentiel à glissement limité avec un taux de blocage variable et pilotable,
- un différentiel bloqué, du type pont bloqué sur 4x4,
- une fonction ASR pour amélioration de la motricité,
- une fonction ESP pour les véhicules 4x4.

Avantageusement, sur une demande d'apprentissage de la position de référence du module hydraulique émise par le contrôle/commande du groupe motopropulseur, il est effectué une étape d'apprentissage d'une position de référence pour chaque partie droite et gauche du module hydraulique avec émission d'un indicateur d'apprentissage signifiant si l'apprentissage est en cours ou non.

Avantageusement, quand le module hydraulique est à cylindrée variable avec un circuit hydraulique commun aux deux parties, les plateaux solidarisés respectivement à ou aux éléments flottants de la partie droite ou de la partie gauche étant indépendants et inclinables en présentant une position angulaire réglable par un actionneur respectif, il est effectué, pour chaque partie du module hydraulique et à partir de la mesure de position angulaire détectée du plateau de chaque partie, l'étape de calcul de la position angulaire normalisée tenant compte de la position angulaire de référence du plateau en tant que position de référence déterminée lors de l'étape d'apprentissage, cette étape de calcul étant suivie de l'étape de calcul du débit de chaque partie du module hydraulique en fonction du calcul de la position angulaire normalisée et du calcul de la vitesse angulaire de la partie selon les mesures de régime de la roue associée, la valeur de débit obtenue lors du calcul du débit servant à la régulation de l'angle du plateau de la partie et à la détermination d'une consigne de commande de l'actionneur du plateau.

Avantageusement, la régulation de l'angle du plateau de chaque partie se fait en fonction de la position angulaire normalisée et de la consigne de l'angle du plateau de la partie, cette consigne étant calculée lors de la régulation du débit hydraulique en fonction de la consigne de débit hydraulique de la partie et de la valeur estimée du débit hydraulique, cette consigne de débit hydraulique étant calculée selon la vitesse angulaire estimée de la partie, la différence de pression calculée du circuit hydraulique et la consigne de couple de la partie, ce calcul étant subordonné à un indicateur d'activation/désactivation de la régulation en couple de la partie signifiant une activation.

Avantageusement, au moins une régulation parmi la régulation du débit et la régulation de l'angle du plateau se fait selon une régulation PID, une régulation cascade ou une régulation par un retour d'état.

Avantageusement, la différence de pression du circuit hydraulique est calculée en fonction de la différence de pressions haute et basse du circuit hydraulique mesurées par chaque capteur de pression.

Avantageusement, l'indicateur d'activation/désactivation est déterminé lors d'une étape d'activation du contrôle/commande de la partie en fonction de l'état de la partie, l'indicateur d'apprentissage de la position de référence et de divers paramètres de fonctionnement du véhicule dont au moins la tension de la batterie.

L'invention concerne aussi un dispositif de contrôle/commande d'un module hydraulique équipant un véhicule automobile hybride pour la mise en oeuvre d'un tel procédé, le module hydraulique étant à cylindrée variable avec un circuit hydraulique commun aux deux parties droite ou gauche du module, les plateaux solidarisés respectivement avec un des éléments parmi le ou les cylindres et le ou les pistons de chaque moteur de la partie droite ou de la partie gauche du module étant indépendants et inclinables en présentant une position angulaire réglable par un actionneur respectif, caractérisé en ce qu'il comprend une unité de contrôle/commande pour chaque partie du module hydraulique connecté en émission et en réception avec le contrôle/commande du groupe motopropulseur, le dispositif comprenant un capteur de position angulaire pour chaque partie du module hydraulique, un capteur de régime d'au moins une roue motrice pour chaque partie et des capteurs de pression haute et basse dans le circuit hydraulique du module hydraulique, les capteurs délivrant les valeurs respectives de position angulaire, de régime d'au moins la roue motrice et de différence de pressions haute et basse relevées à l'unité de contrôle/commande de chaque partie du module hydraulique, le dispositif comprenant une unité de contrôle/commande de l'actionneur du plateau pour chaque partie du module hydraulique afin d'effectuer la régulation du couple d'entraînement du module hydraulique transmis aux roues motrices.

Avantageusement, l'unité de contrôle/commande pour chaque partie du module hydraulique comprend une unité de gestion de la position angulaire du plateau de chaque partie du module, une unité d'estimation du débit de chaque partie du module, une unité de calcul de la différence de pression basse et haute du circuit hydraulique, une unité de gestion des conditions d'activation de la régulation en couple de chaque partie, une unité de régulation en couple de chaque partie et une unité de diagnostic.

L'invention concerne enfin un véhicule hybride hydraulique comportant au moins un module hydraulique, caractérisé en ce que le module hydraulique est contrôlé/commandé conformément à un tel procédé ou comprend un tel dispositif de contrôle/commande.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 illustre le dessin en coupe longitudinale d'un module hydraulique différentiel pouvant être commandé conformément à un procédé selon l'invention,
- la figure 2 est une représentation de l'unité de contrôle/commande d'un dispositif de contrôle/commande pour un module hydraulique différentiel selon la présente invention,
- la figure 3 est une représentation des diverses unités d'un dispositif de contrôle/commande selon la présente invention, ceci pour la partie droite d'un module hydraulique à deux moteurs droit et gauche.

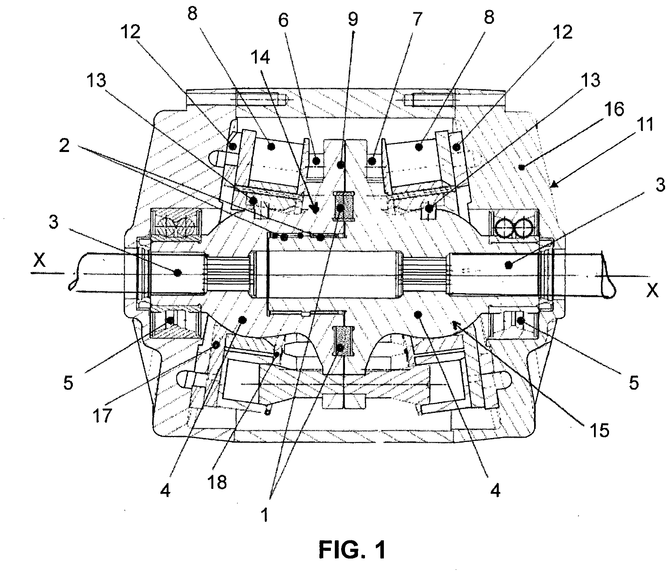

En se référant à la figure 1, un mode de réalisation du module hydraulique différentiel 11 compact pouvant être régulé conformément à un procédé et un dispositif de contrôle/commande selon l'invention comprend un carter 16 dans lequel sont logés un premier et un second moteur hydraulique 14 et 15, respectivement gauche et droit, montés en opposition. Le moteur hydraulique 11 comporte deux parties, droite et gauche qui sont symétriques par rapport à un plan de jonction 9.

L'un 15 des deux moteurs est supporté librement en rotation par l'autre 14 via des paliers à aiguille (ou rouleaux) 2. Chaque moteur hydraulique gauche 14 et droit 15 convertit l'énergie provenant du fluide sous pression en énergie mécanique sous la forme d'un couple d'entraînement transmis à au moins une roue motrice à laquelle chaque moteur 14, 15 est associé, les roues motrices étant non représentées.

Le module comporte deux boîtiers 4, montés en opposition, présentant chacun un flasque, chaque flasque définissant le plateau de chacun des premier et second moteurs hydrauliques gauche 14 et droit 15, centrés sur l'axe de rotation XX' du différentiel. Les plateaux s'étendent parallèlement entre eux, suivant un plan perpendiculaire au plan par lequel passe l'axe de rotation XX' du moteur hydraulique.

Il est prévu un organe de couplage axial 1, notamment une butée à rouleaux, à billes ou à aiguilles, disposée entre et en contact avec les faces des flasques qui sont en regard l'une de l'autre.

La butée axiale est apte à coopérer avec les deux moteurs hydrauliques gauche et droit, de manière à distribuer le couple vers les arbres de sortie couplés aux roues. Les faces des deux flasques, en regard l'une de l'autre, définissent respectivement un plan de roulement pour les rouleaux de la butée axiale.

Chaque sous-ensemble du moteur hydraulique comporte une série de pistons gauche 6, respectivement droit 7, dont les premières extrémités sont fixées au plateau et dont les secondes extrémités sont reçues à coulissement dans un ensemble de cylindres flottants supportés par une plaque support 17. Il est aussi possible que chaque moteur hydraulique 14, 15 comprenne au moins un piston et un cylindre, l'un de ces deux éléments, donc pas nécessairement le piston, étant un élément flottant et solidarisé au plateau.

Deux formes de réalisation du module hydraulique faisant fonction de différentiel sont possibles. Dans la première, les cylindres sont de cylindrée variable et c'est l'angle d'inclinaison du plateau associé respectivement à l'ensemble des pistons ou l'ensemble des cylindres du moteur de la partie droite ou gauche qui détermine la cylindrée. Un actionneur de plateau est alors prévu pour chaque plateau. Cet actionneur peut être de tout type, par exemple électrique, électromagnétique, pneumatique, ou électropneumatique. Un circuit hydraulique est alors commun aux deux moteurs.

Dans la seconde forme de réalisation, les cylindres sont de cylindrée fixe. Dans cette seconde forme, il est alors prévu un circuit hydraulique différent pour les moteurs hydrauliques des parties droite et gauche.

Les cylindres flottants 8 comportent un nombre déterminé de chemises recevant respectivement les secondes extrémités des pistons. Le fond des chemises comporte un orifice assurant une communication avec la glace de distribution, au travers de la plaque support, pour le passage du fluide en mode aspiration (basse pression) ou en en mode refoulement (haute pression) du moteur hydraulique.

Une plaque de maintien axial 18 des cylindres flottants est disposée sur la face ouverte des cylindres. La plaque de maintien est munie d'ouvertures venant en regard des ouvertures des chemises des cylindres. La paroi sur laquelle sont plaqués le barillet et la glace de distribution est inclinée par rapport au plan des plateaux d'un angle déterminé non nul, de l'ordre de 15° à 22°.

Chaque arbre du moteur hydraulique comporte un premier épaulement définissant une première portée cylindrique sur laquelle est monté un palier 5 permettant de supporter l'arbre du moteur hydraulique à rotation dans le carter du module hydraulique 11.

Chaque demi-boîtier est conformé pour présenter une portée rotulaire, adjacente à la première, recevant un joint homocinétique à billes à centre fixe 13 du type à billes, à tripode ou autre, voire coulissant, supportant et entraînant en rotation la glace de distribution, la plaque support, les cylindres flottants et la plaque de maintien.

A ce stade, on retrouve le fonctionnement d'un différentiel classique, c'est-à-dire qu'il y a transmission de couple libre entre les deux arbres de roue d'un même essieu. Deux cas de figures peuvent se présenter :
- les deux arbres de roue tournent à la même vitesse. L'effort de rotation est donc réparti équitablement sur chacune des roues,
- les deux arbres de roue ne tournent pas à la même vitesse, ce qui est le cas dans un virage, alors il existe une rotation différentielle entre les deux moteurs hydrauliques.

Ainsi, la boîte de vitesses classique et la couronne du différentiel et ses composants internes sont remplacées par deux moteurs hydrauliques 14, 15 qui produisent un couple à partir de la pression hydraulique stockée dans les accumulateurs ou fournis par une ou plusieurs pompes et l'appliquent directement aux arbres de roue motrice d'un même essieu.

L'ensemble des composants est avantageusement totalement symétrique. Le moteur de droite 14 est identique à celui de gauche 15, sauf le boîtier 4.

En inversant le sens des plateaux, pour des moteurs à cylindrée variable, il peut être obtenu une fonction de récupération d'énergie au freinage. En effet les moteurs hydrauliques deviennent alors pompes et rechargent l'accumulateur haute pression.

Une telle association de deux moteurs droit et gauche dans un module hydraulique permet un gain de volume sous le capot et sous le plancher du véhicule automobile tout en supprimant avantageusement l'utilisation d'un différentiel.

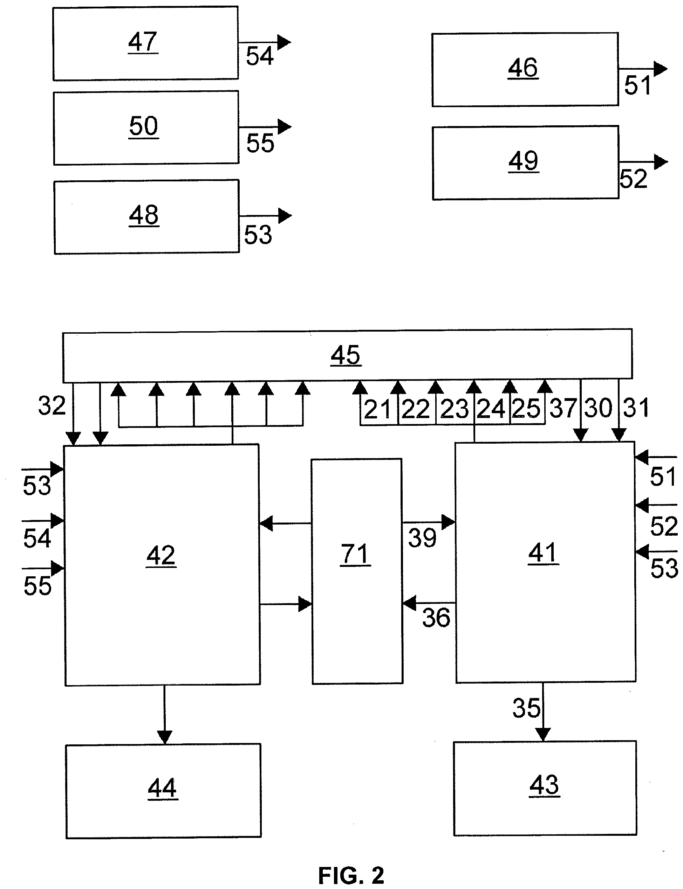

En regard de la figure 2, comme les moteurs du module hydraulique sont commandés indépendamment l'un de l'autre, le dispositif de contrôle/commande du module hydraulique est composé de deux parties indépendantes :
- une unité de contrôle/commande de la partie droite 41 du module hydraulique,
- une unité de contrôle/commande de la partie gauche 42 du module hydraulique.

Ces deux unités de contrôle/commande 41 et 42 sont similaires mais chacune d'elles s'interface individuellement et de façon indépendante avec le contrôle/commande du groupe motopropulseur 45 et avec un gestionnaire de diagnostic 71, le gestionnaire de diagnostic 71 étant intercalé entre les deux unités 41 et 42 à la figure 2.

Dans ce qui va suivre, seule l'unité de contrôle/commande droite 41 du module hydraulique va être détaillée. Cependant, ce qui est énoncé pour cette unité droite 41 est aussi valable pour l'unité de contrôle/commande gauche 42, ces deux unités 41 et 42 étant symétriques dans leurs entrées et sorties.

Ainsi, à la figure 2, les entrées et sorties de l'unité de contrôle/commande gauche 42 vers le contrôle/commande du groupe motopropulseur 45 ne sont pas référencées, sauf la consigne de couple de la partie gauche 32 du module hydraulique en entrée de l'unité gauche 42 mais ces entrées et sorties sont similaires à celles de l'unité de contrôle/commande droite 41.

Les entrées de l'unité de contrôle/commande droite 41 avec le contrôle/commande du groupe motopropulseur 45 sont pour l'entrée:
- une demande d'apprentissage de la position de référence 30 de la partie droite du module hydraulique,
- une consigne de couple 31 de la partie droite du module hydraulique.

Les sorties de l'unité de contrôle/commande droite 41 avec le contrôle/commande du groupe motopropulseur 45 sont pour la sortie:
- le résultat de l'apprentissage de la position de référence 21 de la partie droite du module hydraulique,
- la position angulaire normalisée 22 de la partie droite du module hydraulique,
- la vitesse angulaire estimée 23 de la partie droite du module hydraulique,
- le débit estimé 24 de la partie droite du module hydraulique,
- la différence de pression 25 calculée du circuit hydraulique,
- l'état 37 de la partie droite du module hydraulique.

Les entrée et sortie de l'unité de contrôle/commande droite 41 avec le gestionnaire de diagnostic 71 sont respectivement:
- pour l'entrée: une autorisation d'activation du contrôle 39 de la partie droite du module hydraulique,
- pour la sortie: un indicateur de défauts 36 de la partie droite du module hydraulique.

L'unité de contrôle/commande droite 41 présente aussi une sortie avec l'unité de contrôle/commande de l'actionneur 43 de la partie droite du module hydraulique pour la transmission d'une consigne de commande de l'actionneur 35 de la partie droite du module hydraulique. Cet actionneur 43 sert avantageusement à réguler la position angulaire du plateau pour des variations de cylindrée.

L'unité de contrôle/commande droite 41 présente aussi des entrées pour des valeurs mesurées par divers capteurs :
- la tension 51 du capteur de position angulaire de la partie droite 46 du module hydraulique,
- la tension 52 du capteur du régime 49 de la roue droite reliée au moteur de la partie droite du module hydraulique,
- les valeurs de pression haute et basse mesurées 53 par le capteur de pression 48 du circuit hydraulique.

Pour l'unité de contrôle/commande gauche 42, les tensions 54, 55 du capteur de position angulaire 47 de la partie gauche et du capteur de régime 49 de la roue gauche peuvent être différentes des tensions à droite tandis que les pressions haute et basse mesurées 53 du circuit hydraulique peuvent être les mêmes à droite et à gauche. Ceci est le cas quand le module hydraulique différentiel présente un circuit hydraulique commun pour les deux parties droite et gauche.

Les capteurs de position angulaire 46, 47 droit et gauche émettant respectivement les tensions droite 51 et gauche 54, les capteurs de régime de la roue motrice droite et gauche 49, 50 émettant respectivement les tensions droite 52 et gauche 55 et les capteurs de pressions haute et basse 48 émettant les valeurs de pression 53 sont montrés en partie haute de la figure 2. Ces capteurs de position angulaire, de régime et de pressions du circuit hydraulique peuvent être de tout type, par exemple à effet hall ou résistifs, etc.

Ainsi, selon la présente invention pour les deux modes de réalisation du module hydraulique différentiel, la régulation du couple transmis aux roues motrices s'effectue indépendamment pour les parties droite et gauche, cette régulation étant fonction des mesures de différence de pression haute et basse 53 du ou des circuits hydrauliques, de la position angulaire 51, 54 de la partie respective et du régime 52, 55 de la roue motrice associée à la partie droite ou gauche. L'unité de contrôle/commande droite 41 ou gauche 42 envoie une consigne de contrôle/commande à l'actionneur de la partie droite ou gauche du module par l'unité correspondante 43 ou 44.

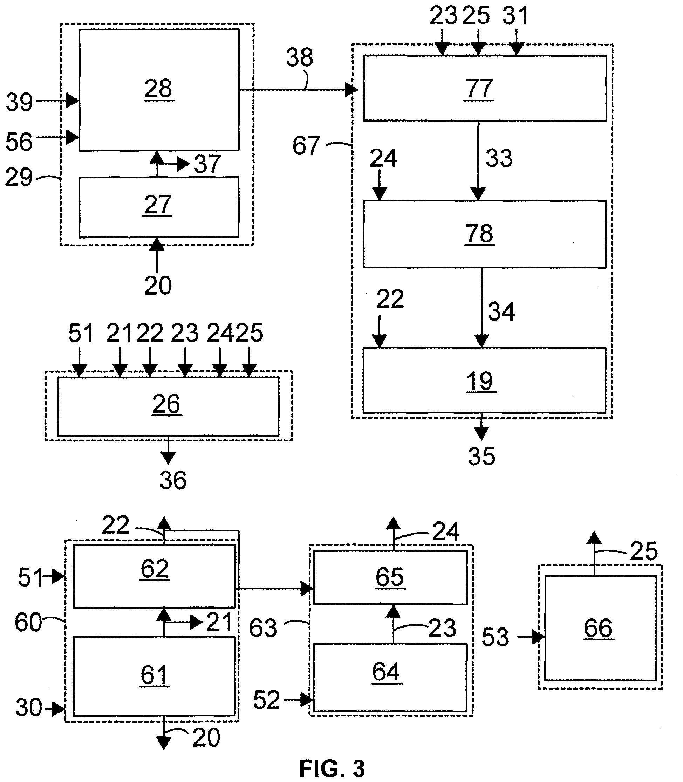

Avantageusement, comme il sera plus amplement détaillé en regard de la figure 3, sur une demande d'apprentissage de la position de référence du module hydraulique émise par le contrôle/commande du groupe motopropulseur 45, il est effectué une étape d'apprentissage d'une position de référence pour chaque partie droite et gauche du module hydraulique avec émission d'un indicateur d'apprentissage signifiant si l'apprentissage est en cours ou non.

En se référant à la figure 3, il peut être vu que l'unité de contrôle/commande de la partie droite, référencée 41 à la figure 2, du module hydraulique comprend six unités principales. La première unité est l'unité de gestion de la position angulaire 60 de la partie droite du module hydraulique. La seconde unité est l'unité d'estimation du débit 63 de la partie droite du module hydraulique.

La troisième unité est l'unité de calcul de la différence de pressions basse et haute 66 du circuit hydraulique. La quatrième unité est l'unité de gestion des conditions d'activation de la régulation en couple 29 de la partie droite du module hydraulique. La cinquième unité est l'unité de régulation en couple 67 de la partie droite du module hydraulique et la sixième unité est l'unité de diagnostic 26.

La figure 3 va être maintenant plus amplement décrite avec un dispositif de contrôle/commande du module hydraulique différentiel selon le premier mode de réalisation du module précédemment mentionné. Dans ce mode, c'est l'angle d'inclinaison du plateau de la partie droite ou gauche qui détermine la cylindrée, un actionneur agissant sur chaque plateau droit ou gauche. La position angulaire de la partie droite ou gauche est dans ce cas celle du plateau de la partie droite ou gauche.

La première unité ou l'unité de gestion de la position angulaire 60 comprend une sous-unité d'apprentissage de la position de référence 61 de la partie droite du module hydraulique, avantageusement la position angulaire de référence du plateau dans le premier mode. Cette sous-unité 61 permet d'apprendre la position de référence de la partie droite du module hydraulique dans l'usine terminale, en après-vente et durant la vie du véhicule suite à une demande d'apprentissage 30 envoyé par le contrôle/commande du groupe motopropulseur, référencé 45 à la figure 2. Cette position de référence de la partie droite est avantageusement la position angulaire de référence du plateau dans le premier mode.

Durant toute la durée de l'apprentissage, l'indicateur d'apprentissage 20 ou booléen signifiant que l'apprentissage de la position de référence de la partie droite du module hydraulique est en cours vaut 1. A la fin de l'apprentissage, cet indicateur d'apprentissage 20 repasse à 0.

L'unité de gestion de la position angulaire 60, avantageusement la position angulaire du plateau, comprend aussi une sous-unité de calcul de la position angulaire 62 de la partie droite du module hydraulique. Cette sous-unité 62 permet de traduire la tension 51 fournie par le capteur de position angulaire de la partie droite, avantageusement celle de son plateau, ce capteur ayant été référencé 46 à la figure 2, en position angulaire normalisée 22. Il est tenu compte de la valeur apprise de la position de référence 21 de la partie droite, avantageusement celle de son plateau, par la sous-unité d'apprentissage de la position de référence 61 de la partie droite du module hydraulique, cette sous-unité faisant partie de l'unité de gestion de la position angulaire 60.

L'unité d'estimation du débit 63 de la partie droite du module hydraulique comprend une sous-unité de calcul de la vitesse angulaire 64 de la partie droite du module hydraulique. Cette sous-unité de calcul 64 permet de traduire la tension 52 fournie par le capteur de régime de la roue droite liée à la partie droite du module hydraulique, ce capteur ayant été référencé 49 à la figure 2, en vitesse angulaire estimée 23 de la partie droite du module hydraulique.

La seconde unité ou unité d'estimation du débit de la partie droite 63 comprend aussi une sous-unité de calcul du débit 65 de la partie droite du module hydraulique. Cette sous-unité de calcul du débit 65 permet de calculer le débit estimé 24 de la partie droite du module hydraulique en utilisant la vitesse angulaire estimée 23 de la partie droite, et la cylindrée du moteur droit. Cette dernière est calculée en tenant compte de certaines caractéristiques physiques connues de la partie droite du module hydraulique et de la position angulaire normalisée 22 de la partie droite, avantageusement celle de son plateau.

La troisième unité ou unité de calcul de la différence de pressions basse et haute 66 du circuit hydraulique permet de calculer la différence de pression du circuit hydraulique 25 en utilisant les valeurs des pressions haute et basse mesurées 53 du circuit hydraulique.

La quatrième unité ou unité de gestion des conditions d'activation de la régulation en couple 29 de la partie droite comprend deux sous-unités qui sont :
- la sous-unité de détection de l'état 27 de la partie droite du module hydraulique. En exploitant l'indicateur d'apprentissage 20 signifiant que l'apprentissage de la position de référence de la partie droite du module hydraulique est en cours, cette sous-unité 27 délivre un indicateur de l'état 37 de la partie droite du module hydraulique, avec deux positions respectivement en cours d'apprentissage ou disponible,
- la sous-unité de conditions d'activation du contrôle/commande 28 de la partie droite du module hydraulique. Cette sous-unité 28 élabore un indicateur d'activation/désactivation de la régulation en couple 38 de la partie droite du module hydraulique en fonction de l'indicateur de l'état 37 de la partie droite du module hydraulique, de la tension de la batterie 56 et de l'autorisation d'activation du contrôle 39 de la partie droite du module hydraulique. L'autorisation d'activation du contrôle 39 est issue du gestionnaire de diagnostic, ce gestionnaire de diagnostic ayant été référencé 71 à la figure 2.

La cinquième unité ou unité de régulation en couple 67 de la partie droite du module hydraulique comprend une sous-unité de calcul de la consigne de débit 77 de la partie droite du module hydraulique. Cette sous-unité 77 permet de calculer une consigne de débit calculée 33 de la partie droite du module hydraulique.

Ce calcul s'effectue en fonction de la consigne de couple 31 de la partie droite du module hydraulique en provenance du contrôle/commande du groupe motopropulseur, référencé 45 à la figure 2, de la différence de pression calculée 25 du circuit hydraulique provenant de l'unité de calcul de la différence de pression basse et haute 66 du circuit hydraulique et de la vitesse angulaire estimée 23 de la partie droite, provenant de la sous-unité de calcul de la vitesse angulaire 64 de la partie droite du module hydraulique.

L'unité de régulation en couple 67 de la partie droite comprend aussi une sous-unité de régulation en débit 78 de la partie droite du module hydraulique. Cette sous-unité 78 permet de réguler le débit de la partie droite du module hydraulique. L'erreur de débit entre la consigne de débit calculée 33 de la partie droite du module hydraulique et le débit estimé 24 de la partie droite du module hydraulique est calculée.

Cette erreur de débit constitue l'entrée d'un régulateur disposant de trois actions : proportionnelle, intégrale et dérivée. Ce type de régulateur, par exemple connu sous le nom de régulateur PID, est généralement suffisant pour ce type de régulation. Il peut par exemple élaborer une consigne de l'angle du plateau 34 de la partie droite du module hydraulique. Ceci n'est pas limitatif et, en alternative, il peut être utilisé d'autres formes de régulation de position telles que la régulation cascade, la régulation par un retour d'état, etc.

L'unité de régulation en couple 67 de la partie droite comprend aussi une sous-unité de régulation de l'angle du plateau 19 de la partie droite du module hydraulique. L'erreur d'angle de plateau entre la consigne de l'angle du plateau 34 de la partie droite du module hydraulique et la position angulaire normalisée 22 du plateau de la partie droite du module hydraulique est alors calculée. Cette erreur d'angle de plateau droit constitue l'entrée d'un régulateur PID, comme précédemment mentionné pour le calcul de l'erreur de débit. Le régulateur élabore une consigne de commande 35 de l'actionneur du plateau de la partie droite du module hydraulique.

Dans le cas du second mode de la présente invention dans lequel il est prévu un circuit hydraulique indépendant pour chaque moteur hydraulique des parties droite et gauche, c'est le débit dans chaque circuit qui est utilisé pour réguler la consigne de couple avec élaboration d'une consigne de débit comme consigne de commande 35.

La sixième unité ou unité de diagnostic 26 permet d'informer le gestionnaire de diagnostic, référencé 71 à la figure 2, des dysfonctionnements du module hydraulique via un indicateur de défauts 36. Parmi les défauts possibles, il est possible de citer non limitativement une dérive excessive de la position de référence de la partie droite du module hydraulique apprise, avantageusement la position angulaire de son plateau.

Les phases de fonctionnement de l'unité de contrôle/commande de la partie droite du module hydraulique, référencé 41 à la figure 2, se résument principalement à deux situations :
- la régulation du couple transmis à la roue motrice droite par la partie droite du module hydraulique pendant un roulage du véhicule, et
- l'apprentissage de la position de référence de la partie droite du module hydraulique.

Le fonctionnement du procédé de contrôle/commande selon la présente invention est le suivant et va être décrit en regard des figures 2 et 3. Dans ce qui suit, il sera fait principalement référence à la partie droite du module hydraulique mais ce qui est énoncé est aussi valable pour la partie gauche.

Dans le cas d'une régulation de couple transmis au roues motrices, le contrôle/commande du groupe motopropulseur 45 envoie une consigne de couple de la partie droite du module hydraulique, au travers du flux 31 au contrôle/commande de la partie droite 41 ou de la partie gauche 42 du module hydraulique.

En ce qui la concerne, l'unité de contrôle/commande de la partie droite 41 du module hydraulique s'assure que toutes les conditions d'activation de la régulation de couple sont réunies, ceci par l'intermédiaire de l'unité de gestion des conditions d'activation de la régulation en couple 29 de la partie droite du module hydraulique. Les conditions d'activation sont les suivantes :
- l'état de la partie droite du module hydraulique qualifié de disponible selon l'indicateur de l'état 37 de la partie droite,
- un ou divers paramètres de fonctionnement du véhicule, parmi lesquels une tension de la batterie non critique, selon le signal référencé 56,
- l'autorisation d'activation du contrôle 39 de la partie droite du module hydraulique donnée par le gestionnaire de diagnostic 71.

Si ces conditions sont réunies, l'unité de contrôle/commande de la partie droite 41 active le fonctionnement de l'unité de régulation en couple 67 de la partie droite du module hydraulique par l'intermédiaire de l'indicateur d'activation/désactivation de la régulation en couple 38 de la partie droite du module hydraulique.

L'unité de régulation en couple 67 se charge ensuite de réaliser le couple demandé selon la consigne de couple 31 envoyée par le contrôle/commande du groupe motopropulseur 45 en élaborant une consigne de commande de l'actionneur 35 de la partie droite du module hydraulique qui est envoyée à l'unité de contrôle/commande de l'actionneur 43 de la partie droite du module hydraulique.

Dans le cas d'un apprentissage de la position de référence du module hydraulique, le contrôle/commande du groupe motopropulseur 45 envoie une demande d'apprentissage de la position de référence 30 de la partie droite du module hydraulique à l'unité de contrôle/commande 41 de cette partie droite, avantageusement la position angulaire de référence 30 de son plateau.

Cette demande est réalisée par la sous-unité d'apprentissage de la position de référence 61 de la partie droite du module hydraulique. Le résultat de l'apprentissage est communiqué par le flux 21 contenant les résultats de l'apprentissage de la position de référence de la partie droite du module hydraulique à la sous-unité de calcul de la position angulaire 62 de la partie droite du module hydraulique.

Pendant toute la durée de l'apprentissage, l'indicateur d'apprentissage de la position de référence 20 de la partie droite du module hydraulique indique que l'apprentissage de la position de référence est en cours et l'état 37 de la partie droite du module hydraulique est qualifié être en cours d'apprentissage.

Deux cas de figures peuvent se présenter :
- les deux arbres de sortie, donc les roues motrices associées, tournent à la même vitesse. L'effort de rotation est donc réparti équitablement sur chacune des roues. Dans ce cas, les consignes de couple 31 et 32 de la partie droite et la partie gauche du module hydraulique envoyées par le dispositif de contrôle/commande du groupe motopropulseur 45 sont égales,
- les deux arbres de sortie, donc les roues motrices associées, ne tournent pas à la même vitesse, ce qui est le cas dans un virage. Il existe alors une rotation différentielle entre les deux moteurs hydrauliques. Dans ce cas, le contrôle/commande du groupe motopropulseur 45 adapte les consignes de couple 31 et 32 de la partie droite et de la partie gauche du module hydraulique envoyées respectivement aux unités de contrôle/commande de la partie droite 41 et de la partie gauche 42 du module hydraulique en fonction de cette rotation différentielle. Ces consignes de couple 31 et 32 sont différentes dans ce cas.

Il y a donc indépendance des unités de contrôle/commande de la partie droite 41 et de la partie gauche 42 du module hydraulique. Cette indépendance permet d'obtenir les configurations différentielles différentes citées précédemment.

Un tel procédé et un tel dispositif de contrôle/commande d'un module différentiel hydraulique permettent au module hydraulique d'atteindre les performances attendues en termes:
- de maîtrise du couple aux roues du véhicule en maîtrisant le couple au niveau des parties droite et gauche du module hydraulique,
- de maîtrise du couple pendant la phase d'apprentissage de la position de référence des parties droite et gauche du module hydraulique,
- de respect la sécurité en empêchant des sauts de couple non désirés aux roues,
- de respect l'agrément client et les critères de bruyance,
- d'indépendance du dispositif de contrôle/commande entre la partie droite et gauche du module hydraulique.

L'invention n'est nullement limitée aux modes de réalisation décrits et illustrés qui n'ont été donnés qu'à titre d'exemples.

## Revendications

1. Procédé de contrôle/commande d'un module hydraulique (11) équipant un véhicule automobile hybride, le module hydraulique (11) comprenant deux moteurs hydrauliques (14, 15) logés respectivement dans une partie droite ou gauche, chaque moteur comprenant au moins un piston et un cylindre avec l'un de ces deux éléments étant un élément flottant et solidarisé à un plateau, chaque moteur (14, 15) étant raccordé à au moins un circuit hydraulique sélectivement à basse pression ou à haute pression et convertissant l'énergie provenant du fluide sous pression en énergie mécanique sous la forme d'un couple d'entraînement transmis à au moins une roue motrice à laquelle il est associé, le procédé effectuant, sur une demande de consigne de couple respective émise par le contrôle/commande du groupe motopropulseur (45), une régulation de couple des moteurs hydrauliques (14, 15), **caractérisé en ce que** la régulation du couple s'effectue indépendamment pour les parties droite et gauche, cette régulation étant fonction des mesures de différence de pression haute et basse (53) du circuit hydraulique, de la position angulaire (51, 54) de la partie respective et du régime (52, 55) de la roue motrice associée à la partie.

2. Procédé selon la revendication 1, pour lequel, sur une demande d'apprentissage de la position de référence du module hydraulique (11) émise par le contrôle/commande du groupe motopropulseur (45), il est effectué une étape d'apprentissage d'une position de référence pour chaque partie droite et gauche du module hydraulique (11) avec émission d'un indicateur d'apprentissage (20) signifiant si l'apprentissage est en cours ou non.

3. Procédé selon la revendication 2, dans lequel, quand le module hydraulique (11) est à cylindrée variable avec un circuit hydraulique commun aux deux parties, les plateaux solidarisés respectivement à ou aux éléments flottants de la partie droite ou de la partie gauche étant indépendants et inclinables en présentant une position angulaire réglable par un actionneur respectif, il est effectué, pour chaque partie du module hydraulique (11) et à partir de la mesure de position angulaire détectée du plateau de chaque partie, l'étape de calcul de la position angulaire normalisée (22) tenant compte de la position angulaire de référence (21) du plateau en tant que position de référence déterminée lors de l'étape d'apprentissage, cette étape de calcul étant suivie de l'étape de calcul du débit (24) de chaque partie du module hydraulique (11) en fonction du calcul de la position angulaire normalisée (22) et du calcul de la vitesse angulaire de la partie selon les mesures de régime (52, 55) de la roue associée, la valeur de débit (24) obtenue lors du calcul du débit servant à la régulation de l'angle du plateau de la partie et à la détermination d'une consigne de commande (35) de l'actionneur du plateau.

4. Procédé selon la revendication 3, pour lequel la régulation de l'angle du plateau de chaque partie se fait en fonction de la position angulaire normalisée (22) et de la consigne de l'angle (34) du plateau de la partie, cette consigne (34) étant calculée lors de la régulation du débit hydraulique en fonction de la consigne de débit (33) hydraulique de la partie et de la valeur estimée du débit (24) hydraulique, cette consigne de débit (33) hydraulique étant calculée selon la vitesse angulaire estimée (23) de la partie, la différence de pression calculée (25) du circuit hydraulique et la consigne de couple (31) de la partie, ce calcul étant subordonné à un indicateur d'activation/désactivation de la régulation en couple (38) de la partie signifiant une activation.

5. Procédé selon la revendication 4, pour lequel au moins une régulation parmi la régulation du débit et la régulation de l'angle du plateau se fait selon une régulation PID, une régulation cascade ou une régulation par un retour d'état.

6. Procédé selon l'une quelconque des revendications 4 ou 5, dans lequel la différence de pression du circuit hydraulique est calculée en fonction de la différence de pressions haute et basse du circuit hydraulique mesurées par chaque capteur de pression (46, 48).

7. Procédé selon l'une quelconque des revendications 4 à 6, dans lequel l'indicateur d'activation/désactivation (38) est déterminé lors d'une étape d'activation du contrôle/commande de la partie en fonction de l'état de la partie, l'indicateur d'apprentissage (20) de la position de référence et de divers paramètres de fonctionnement du véhicule dont au moins la tension de la batterie (39).

8. Dispositif de contrôle/commande d'un module hydraulique (11) équipant un véhicule automobile hybride pour la mise en oeuvre d'un procédé selon l'une quelconque des revendications précédentes, le module hydraulique (11) étant à cylindrée variable avec un circuit hydraulique commun aux deux parties droite ou gauche du module, les plateaux solidarisés respectivement avec un des éléments parmi le ou les cylindres et le ou les pistons de chaque moteur de la partie droite ou de la partie gauche du module étant indépendants et inclinables en présentant une position angulaire réglable par un actionneur respectif, **caractérisé en ce qu'**il comprend une unité de contrôle/commande (41, 42) pour chaque partie du module hydraulique (11) connecté en émission et en réception avec le contrôle/commande du groupe motopropulseur (45), le dispositif comprenant un capteur de position angulaire (46, 47) pour chaque partie du module hydraulique (11), un capteur de régime (49, 50) d'au moins une roue motrice pour chaque partie et des capteurs de pression (48) haute et basse dans le circuit hydraulique du module hydraulique (11), les capteurs (46 à 50) délivrant les valeurs respectives de position angulaire (51, 54), de régime (52, 55) d'au moins la roue motrice et de différence de pressions haute et basse (53) relevées à l'unité de contrôle/commande (41, 42) de chaque partie du module hydraulique (11), le dispositif comprenant une unité de contrôle/commande de l'actionneur (43, 44) du plateau pour chaque partie du module hydraulique (11) afin d'effectuer la régulation du couple d'entraînement du module hydraulique (11) transmis aux roues motrices.

9. Dispositif de contrôle/commande selon la revendication 8, pour lequel l'unité de contrôle/commande (41, 42) pour chaque partie du module hydraulique (11) comprend une unité de gestion de la position angulaire (60) du plateau de chaque partie du module, une unité d'estimation du débit (63) de chaque partie du module, une unité de calcul de la différence de pression basse et haute (66) du circuit hydraulique, une unité de gestion des conditions d'activation de la régulation en couple (29) de chaque partie, une unité de régulation en couple (67) de chaque partie et une unité de diagnostic (26).

10. Véhicule hybride hydraulique comportant au moins un module hydraulique (11), **caractérisé en ce que** le module hydraulique (11) est contrôlé/commandé conformément à un procédé selon l'une quelconque des revendications 1 à 7 ou comprend un dispositif de contrôle/commande selon l'une quelconque des revendications 8 ou 9.

## Patentansprüche

1. Verfahren zum Steuern/Regeln eines Hydraulikmoduls (11), das ein Hybridkraftfahrzeug ausstattet, wobei das Hydraulikmodul (11) zwei Hydraulikmotoren (14, 15) umfasst, die jeweils in einem rechten oder linken Teil untergebracht sind, wobei jeder Motor mindestens einen Kolben und einen Zylinder umfasst, wobei eines dieser zwei Elemente ein gelagertes Element ist und fest mit einer Platte verbunden ist, wobei jeder Motor (14, 15) an mindestens einen Hydraulikkreislauf selektiv mit Niederdruck oder Hochdruck angeschlossen ist und Energie, die von dem Fluid unter Druck kommt, in mechanische Energie in der Form eines Antriebsmoments umwandelt, das an mindestens ein Antriebsrad übertragen wird, mit dem er assoziiert ist, wobei das Verfahren auf eine jeweilige Solldrehmomentanfrage, die von der Steuerung/Regelung des Antriebsaggregats (45) ausgegeben wird, eine Drehmomentregelung der Hydraulikmotoren (14, 15) ausführt, **dadurch gekennzeichnet, dass** die Regelung des Drehmoments unabhängig für den rechten und linken Teil erfolgt, wobei diese Regelung von Unterschiedsmessungen von Hoch- und Niederdruck (53) des Hydraulikkreislaufs, von der Winkelposition (51, 54) des jeweiligen Teils und von der Drehzahl (52, 55) des mit dem Teil assoziierten Antriebsrads abhängt.

2. Verfahren nach Anspruch 1 wobei auf eine Lernanfrage der Bezugsposition des Hydraulikmoduls (11), die von der Steuerung/Regelung des Antriebsaggregats (45) ausgegeben wird, ein Lernschritt einer Bezugsposition für den rechten und den linken Teil des Hydraulikmoduls (11) mit Ausgabe eines Lernindikators (20), der meldet, ob das Lernen läuft oder nicht, ausgeführt wird.

3. Verfahren nach Anspruch 2, wobei, wenn das Hydraulikmodul (11) variablen Hubraum mit einem gemeinsamem Hydraulikkreislauf für die zwei Teile hat, die Platten, die jeweils fest mit dem oder den gelagerten Elementen des rechten Teils oder des linken Teil verbunden sind, unabhängig und neigbar sind, indem sie eine Winkelposition aufweisen, die von einem jeweiligen Aktuator einstellbar ist, für jeden Teil des Hydraulikmoduls (11) und ausgehend von der erfassten Winkelpositionsmessung der Platte jedes Teils, der Schritt des Berechnens der genormten Winkelposition (22) unter Berücksichtigen der Bezugswinkelposition (41) der Platte als Bezugsposition, die bei dem Lernschritt bestimmt wird, ausgeführt wird, wobei auf diesen Berechnungsschritt der Berechnungsschritt des Durchsatzes (44) jedes Teils des Hydraulikmoduls (11) in Abhängigkeit von der Berechnung der genormten Winkelposition (22) und der Berechnung der Winkelgeschwindigkeit des Teils gemäß den Drehzahlmessungen (52, 55) des assoziierten Rads folgt, wobei der Durchsatzwert (24), der bei der Berechnung des Durchsatzes erhalten wird, zur Regelung des Winkels der Platte des Teils und zum Bestimmen eines Steuersollwerts (35) des Aktuators der Platte dient.

4. Verfahren nach Anspruch 3, für das die Regelung des Winkels der Platte jedes Teils in Abhängigkeit von der genormten Winkelposition (22) und von dem Sollwert des Winkels (34) der Platte des Teils erfolgt, wobei dieser Sollwert (34) bei der Regelung des hydraulischen Durchsatzes in Abhängigkeit von dem hydraulischen Durchsatzsollwert (33) des Teils und dem geschätzten Wert des hydraulischen Durchsatzes (24) berechnet wird, wobei dieser hydraulische Durchsatzsollwert (33) gemäß der geschätzten Winkelgeschwindigkeit (23) des Teils, dem berechneten Druckunterschied (25) des Hydraulikkreislaufs und dem Drehmomentsollwert (31) des Teils berechnet wird, wobei diese Berechnung einem Aktivierungs-/Deaktivierungsindikator der Drehmomentregelung (38) des Teils, der eine Aktivierung meldet, unterliegt.

5. Verfahren nach Anspruch 4, für das mindestens eine Regelung aus der Regelung des Durchsatzes und der Regelung des Winkels der Platte gemäß einer PID-Regelung, einer Kaskadenregelung oder einer Regelung durch Zustandsrückmeldung erfolgt.

6. Verfahren nach einem der Ansprüche 4 oder 5, wobei der Druckunterschied des Hydraulikkreislaufs in Abhängigkeit von dem Hochdruck- und Niederdruckunterschied des hydraulischen Kreislaufs, die von jedem Drucksensor (46, 48) gemessen werden, berechnet wird.

7. Verfahren nach einem der Ansprüche 4 bis 6, wobei der Aktivierungs-/Deaktivierungsindikator (38) bei einem Aktivierungsschritt der Steuerung/Regelung des Teils in Abhängigkeit von dem Zustand des Teils, dem Lernindikator (20) der Bezugsposition und diversen Betriebsparametern des Fahrzeugs, darunter mindestens die Batteriespannung (39), bestimmt wird.

8. Vorrichtung zum Steuern/Regeln eines Hydraulikmoduls (11), das ein Hybridkraftfahrzeug ausstattet, zum Umsetzen eines Verfahrens nach einem der vorhergehenden Ansprüche, wobei das Hydraulikmodul (11) variablen Hubraum hat, mit einem Hydraulikkreislauf, der dem rechten oder linken Teil des Moduls gemeinsam ist, wobei die Platten, die jeweils fest mit einem der Elemente aus dem oder den Zylindern und dem oder den Kolben jedes Motors des rechten Teils oder des linken Teils fest verbunden sind, unabhängig und neigbar sind und eine Winkelposition aufweisen, die durch einen jeweiligen Stellantrieb einstellbar ist, **dadurch gekennzeichnet, dass** sie eine Steuer-/Regelungseinheit (41, 42) für jeden Teil des Hydraulikmoduls (11), das in Senden und Empfang mit der Steuerung/Regelung des Antriebsaggregats (45) verbunden ist, umfasst, wobei die Vorrichtung einen Winkelpositionssensor (46, 47) für jeden Teil des Hydraulikmoduls (11), einen Drehzahlsensor (49, 50) mindestens eines Antriebsrads für jeden Teil und Hochdruck- und Niederdrucksensoren (48) in dem Hydraulikkreislauf des Hydraulikmoduls (11) umfasst, wobei die Sensoren (46 bis 50) jeweilige Werte für Winkelposition (51, 54), Drehzahl (52, 55) mindestens des Antriebsrads und Werte von Hochdruck- und Niederdruckunterschieden (53), die an der Steuer-/Regeleinheit (41, 42) jedes Teils des Hydraulikmoduls (11) erhoben werden, liefern, wobei die Vorrichtung eine Steuer-/Regeleinheit des Stellantriebs (43, 44) der Platte für jeden Teil des Hydraulikmoduls (11) umfasst, um die Regelung des Antriebsdrehmoments des Hydraulikmoduls (11), die zu den Antriebsrädern übertragen wird, auszuführen.

9. Vorrichtung zum Steuern/Regeln nach Anspruch 8, wobei die Steuer-/Regeleinheit (41, 42) für jeden Teil des Hydraulikmoduls (11) eine Verwaltungseinheit der Winkelposition (60) der Platte jedes Teils des Moduls, eine Schätzungseinheit des Durchsatzes (63) jedes Teils des Moduls, eine Berechnungseinheit des Niederdruck- und Hochdruckunterschieds (66) des Hydraulikkreislaufs, eine Verwaltungseinheit der Aktivierungsbedingungen der Drehmomentregelung (29) jedes Teils, eine Drehmomentregelungseinheit (67) jedes Teils und eine Diagnoseeinheit (26) umfasst.

10. Hydraulisches Hybridfahrzeug, das mindestens ein Hydraulikmodul (11) umfasst, **dadurch gekennzeichnet, dass** das Hydraulikmodul in Übereinstimmung mit einem Verfahren nach einem der Ansprüche 1 bis 7 gesteuert/geregelt ist oder eine Steuer-/Regelvorrichtung nach einem der Ansprüche 8 oder 9 umfasst.

## Claims

1. A method for controlling/commanding a hydraulic module (11) equipping a hybrid motor vehicle, the hydraulic module (11) including two hydraulic engines (14, 15) housed respectively in a right-hand or left-hand part, each engine including at least one piston and a cylinder with one of these two elements being a floating element and secured to a plate, each engine (14, 15) being connected to at least one selectively low pressure or high pressure circuit and converting the energy originating from the fluid under pressure into mechanical energy in the form of a drive torque transmitted to at least one drive wheel with which it is associated, the method carrying out, on a respective torque setpoint request emitted by the control/command of the powertrain (45), a torque regulation of the hydraulic engines (14, 15), **characterized in that** the torque regulation is carried out independently for the right-hand and left-hand parts, this regulation being a function of the measurements of high pressure and low pressure difference (53) of the hydraulic circuit, of the angular position (51, 54) of the respective part and of the speed (52, 55) of the drive wheel associated with the part.

2. The method according to Claim 1, for which, on learning request of the reference position of the hydraulic module (11) emitted by the control/command of the powertrain (45), a learning step is carried out of a reference position for each right-hand and left-hand part of the hydraulic module (11) with emission of a learning indicator (20) signifying whether the learning is in progress or not.

3. The method according to Claim 2, in which, when the hydraulic module (11) is of variable displacement with a hydraulic circuit common to the two parts, the plates secured respectively to the floating element(s) of the right-hand part or of the left-hand part being independent and able to be inclined, presenting an adjustable angular position by a respective actuator, for each part of the hydraulic module (11) and from the detected measurement of angular position of the plate of each part, the step is carried out of calculation of the normalized angular position (22), taking into account the reference angular position (21) of the plate as determined reference position during the learning step, this calculation step being followed by the calculation step of the flow (24) of each part of the hydraulic module (11) as a function of the calculation of the normalized angular position (22) and of the calculation of the angular speed of the part according to the speed measurements (52, 55) of the associated wheel, the flow value (24) obtained during the calculation of the flow serving for the regulation of the angle of the plate of the part and for the determining of a command setpoint (35) of the actuator of the plate.

4. The method according to Claim 3, for which the regulation of the angle of the plate of each part is carried out as a function of the normalized angular position (22) and of the angle setpoint (34) of the plate of the part, this setpoint (34) being calculated during the regulation of the hydraulic flow as a function of the hydraulic flow setpoint (33) of the part and of the estimated value of the hydraulic flow (24), this hydraulic flow setpoint (33) being calculated according to the estimated angular speed (23) of the part, the calculated pressure difference (25) of the hydraulic circuit and the torque setpoint (31) of the part, this calculation being subject to an activation/deactivation indicator of the torque regulation (38) of the part signifying an activation.

5. The method according to Claim 4, for which at least one regulation among the regulation of the flow and the regulation of the angle of the plate is carried out according to a PID regulation, a cascade regulation or a regulation by a status return.

6. The method according to any one of Claims 4 or 5, in which the pressure difference of the hydraulic circuit is calculated as a function of the difference in high and low pressures of the hydraulic circuit, measured by each pressure sensor (46, 48).

7. The method according to any one of Claims 4 to 6, in which the activation/deactivation indicator (38) is determined during an activation step of the control/command of the part as a function of the status of the part, the learning indicator (20) of the reference position and of various operating parameters of the vehicle, including at least the voltage of the battery (39).

8. A device for controlling/commanding a hydraulic module (11) equipping a hybrid motor vehicle for the implementation of a method according to any one of the preceding claims, the hydraulic module (11) being of variable displacement with a hydraulic circuit common to the two right-hand or left-hand parts of the module, the plates secured respective with one of the elements among the cylinder(s) and the piston(s) of each engine of the right-hand part or of the left-hand part of the module being independent and able to be inclined, presenting an angular position which is able to be regulated by a respective actuator, **characterized in that** it includes a control/command unit (41, 42) for each part of the hydraulic module (11) connected in emission or in reception with the control/command of the powertrain (45), the device including an angular position sensor (46, 47) for each part of the hydraulic module (11), a speed sensor (49, 50) of at least one drive wheel for each part, and high and low pressure sensors (48) in the hydraulic circuit of the hydraulic module (11), the sensors (46 to 50) delivering the respective values of angular position (51, 54), speed (52, 55) of at least the drive wheel, and difference in high and low pressures (53) taken at the control/command unit (41, 42) of each part of the hydraulic module (11), the device including a control/command unit of the actuator (43, 44) of the plate for each part of the hydraulic module (11) so as to carry out the regulation of the drive torque of the hydraulic module (11) transmitted to the drive wheels.

9. The control/command device according to Claim 8, for which the control/command unit (41, 42) for each part of the hydraulic module (11) includes a management unit of the angular position (60) of the plate of each part of the module, an estimation unit of the flow (63) of each part of the module, a unit for calculation of the low and high pressure difference (66) of the hydraulic circuit, a management unit of the activation conditions of the torque regulation (29) of each part, a torque regulation unit (67) of each part and a diagnostic unit (26).

10. A hydraulic hybrid vehicle comprising at least one hydraulic module (11), **characterized in that** the hydraulic module (11) is controlled/commanded in accordance with a method according to any one of Claims 1 to 7 or includes a control/command device according to any one of Claims 8 or 9.
